(19) Europäisches Patentamt
European Patent Office
Office européen des brevets

(11) **EP 4 125 238 B1**

(12) **EUROPEAN PATENT SPECIFICATION**

(45) Date of publication and mention
of the grant of the patent:
**28.01.2026 Bulletin 2026/05**

(21) Application number: **21188457.2**

(22) Date of filing: **29.07.2021**

(51) International Patent Classification (IPC):
***H04L 9/08*** *(2006.01)*

(52) Cooperative Patent Classification (CPC):
**H04L 9/0855**

(54) **SYSTEM AND METHOD USING MINIMALLY TRUSTED NODES OVER A QKD NETWORK**

SYSTEM UND VERFAHREN UNTER VERWENDUNG VON MINIMAL VERTRAUENSWÜRDIGEN KNOTEN ÜBER EIN QKD-NETZWERK

SYSTÈME ET PROCÉDÉ UTILISANT DES N UDS DE CONFIANCE MINIMALE SUR UN RÉSEAU QKD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2023 Bulletin 2023/05**

(73) Proprietor: **ID QUANTIQUE SA**
**1227 Genève (CH)**

(72) Inventors:
• **FRÖWIS, Florian**
**1213 Onex (CH)**
• **BUSSIÈRES, Félix**
**1234 Vessy (CH)**

(74) Representative: **KATZAROV S.A.**
**Geneva Business Center**
**12 Avenue des Morgines**
**1213 Petit-Lancy (CH)**

(56) References cited:
EP-A1- 3 886 356          WO-A1-2010/064003
GB-A- 2 546 514          GB-A- 2 581 528
US-A1- 2019 379 463      US-A1- 2024 097 893

• QUOC-CUONG LE ET AL: "On the QKD relaying models", ARXIV.ORG, CORNELL UNIVERSITY LIBRARY, 201 OLIN LIBRARY CORNELL UNIVERSITY ITHACA, NY 14853, 26 March 2008 (2008-03-26), XP080405946

## Description

The present invention relates to a QKD Communication device and protocol and more particularly, to a QKD communication intermediary component adapted to be placed between two remote QKD modules so as to permit extending the distance between the modules.

## Background of the invention

Quantum cryptography or quantum key distribution, in the following also referred to as QKD, is a method allowing the distribution of a secret key between two distant parties, the emitter (Alice) and the receiver (Bob), with a provable security. Quantum key distribution relies on quantum physics principles and encoding information in quantum states as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

One of the most restrictive limitations of QKD is the distance limitation. Due to unavoidable loss in the optical waveguide and the fact that optical amplifiers cannot be used in a quantum channel, the distance between Alice and Bob is limited to about hundred kilometer in a commercial setup and up to four hundred kilometers in an academic experiment.

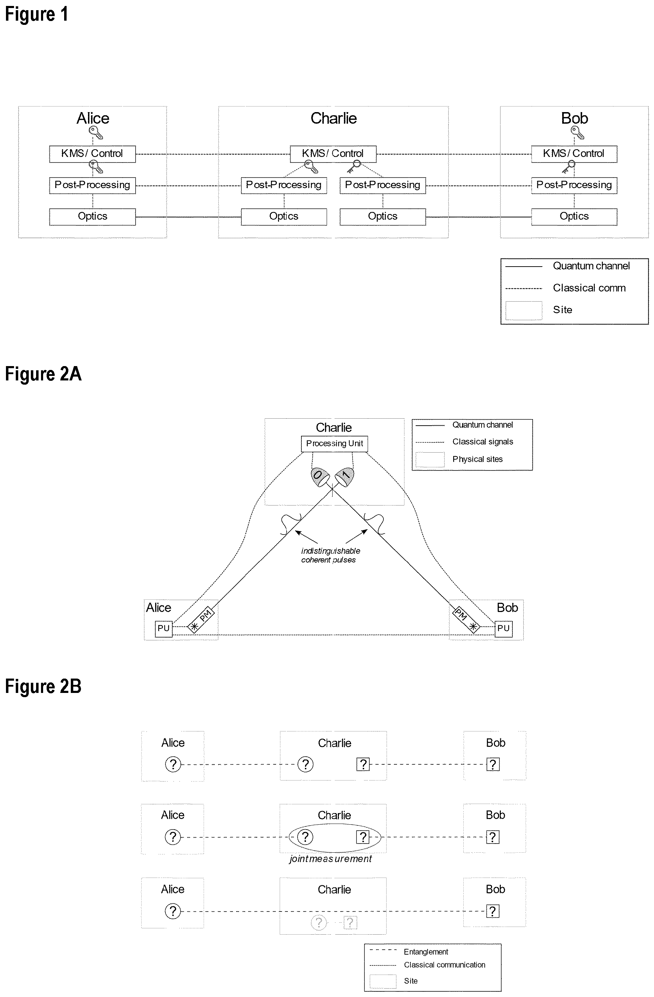

A first solution, which was set up for increasing the distance between Alice and Bob, was the implementation of a Trusted Node (TN), a description of such network can be found in the "ITU-T SG 13 Y.3800, Framework for Networks to supporting Quantum Key Distribution". The principle of a Trusted Node (TN) is shown in figure 1. In this figure we can see that a Trusted Node is an intermediary element (Charlie) between Alice and Bob, which communicates with each of them and acts as a key relay. More particularly, the Trusted Node comprises two QKD modules, each belonging to an independent QKD link. One of the QKD module receives the QKD signal from Alice and processes it in order to produce a first secure key. The other QKD module generates a new QKD signal, and sends it to Bob, in order to generate a second independent key. The two independent keys are then collaboratively processed by Alice, Bob and the two QKD modules, in order to generate a final secure key between Alice and Bob. This means that the Trusted Node comprises a Key Management System (KMS), a QKD receiver for exchanging a key with Alice as well as a QKD emitter for exchanging a key with Bob. Hence, the final key is present at every node, including the intermediate nodes i.e., the Trusted Node, at the KMS layer. In other words, the intermediate node shares the same final key with Alice and Bob, thus it is necessary to fully trust the intermediate node.

Since the information is processed in the Trusted Node and the keys are available there, the Trusted Node requires to be secured and trusted by both parties. By integrating a number of Trusted Nodes in a chain, the Trusted Node QKD model can be used to design long-range QKD networks, possibly spanning whole countries, continents or -by including satellites as Trusted Nodes- the entire world.

In current implementations, TNs store for a certain time (seconds or minutes) the final key that is eventually distributed by the two end users. As the name suggests, the key consumer, which is typically not controlling the intermediate nodes, must trust the network operator that the key is sufficiently protected, within the Trusted Node, from physical and IT attacks. This implies a security risk and prevents QKD from use cases following standards that forbid the storage of the key at third sites, e.g. in the financial sector.

In order to overcome such security problems, one solution is to use concepts based on quantum effects between QKD links such that the intermediate nodes cannot in principle learn about the sensitive key information. There exist currently two important prior art solutions permitting to avoid the presence of key material at intermediate nodes.

These solutions are illustrated in figure 2A and 2B. Figure 2A represents a Twin Field (TF) QKD where the intermediate node (Charlie) allows to establish a distributed key between Alice and Bob without learning any sensitive information. Measurement-device-independent QKD exhibits the same feature but can cover only half the distance.

Figure 2B shows the teleportation (or swapping) of entanglement which is the main tool to establish entanglement from A to B based on available entanglement between A and C, and between B and C, respectively. Typically, quantum memories or other non-optical quantum systems (e.g., trapped atoms) are necessary to end up with high-quality entanglement between the end points. Both figures copied from the Internet.

The one solution called Measurement-device-independent (MDI) or Twin-Field (TF) QKD will be explained below. In both cases a single intermediate node (Charlie in Figure 2, left hand side) establishes with certain measurements correlations between Alice and Bob without learning the values of the correlations themselves. This allows Alice and Bob to establish a secret key without the need to trust Charlie. However, in order for TF QKD to increase the distance compared to a single QKD link, stringent requirements on the synchronization between the two quantum channels are needed, making its implementation challenging and costly. Furthermore, only one intermediate node can be implemented, hence limiting the maximal distance for TF QKD to a few hundreds of kilometers. MDI and TF have been demonstrated in proof of concepts, however they are challenging to implement and restricted to the implementation of one TN, with its implications on the distance of the QKD users.

The second exemplified proposed solution is based on the use of Quantum Repeaters as intermediate nodes. If entanglement can be established between neighboring nodes, there exist quantum protocols to "swap" the entanglement from neighboring nodes to the end nodes of the communication chain. The end nodes perform measurements on the entangled quantum state to establish a raw key that no intermediate node has access to in principle. In practice, however, it comes with a relatively big effort based on socalled quantum memories (i.e., hardware that can store and process quantum information) or on other sophisticated, non-optical quantum systems (trapped neutral atoms or ions, NV centers, etc.). Currently, only low-TRL demonstrations exist, and many technical challenges are ahead of us. Even when resolved, the complexity and hence Capex and Opex are expected to be far beyond those of a TN QKDN.

Other implementations of the TNs network have been proposed. For example, the US patent US9294272B2 aims at reducing the computational complexity of the post-processing phase in TN QKDNs. The proposed protocol is intended to have the advantage that the TN does not need to have the computational resources to extract a secret key from the measurement data as would be required in a conventional TN system. In fact, only raw keys are shared between the intermediate node and Alice and the intermediate node and Bob. Nevertheless, the intermediate node still needs to be trusted since it can compute the final key from its own knowledge of the information being exchanged between the other nodes. Therefore, the US patent US9294272B2 does not propose to minimize the required trust of the intermediate nodes, but only aims at reducing their computational complexity.

The problem associated with traditional TNs network is that the user has to trust the intermediate nodes, hence making important assumptions of the security of the QKD.

Furthermore, the problem associated with the MDI or TF QKD solutions is that their implementation is impractical due to the stringent requirements on the synchronization between the two quantum channels. Furthermore, the most important limitation is that only one intermediate node can be implemented, hence not resolving the distance limitation of practical implementations of the QKD.

Whereas the problem associated with the use of quantum repeaters is the impracticability at the moment to construct such implementations.

Therefore, the object of the present invention is to provide a QKD network that is secure, extends in distance up to approximately 5'000 km and does not require the user to trust the network provider as no final key is stored in the intermediate nodes.

Summary of the invention

The invention is based on the general approach of Minimally Trusted Nodes (MTNs), i.e., the required trust of the intermediate nodes within a QKD network is minimized.

The general idea of the invention is that the storage of the final key at intermediate nodes is not necessary. Single bits of the raw key (i.e., the information about preparation and measurement results) are kept at the MTNs for a few microseconds or at most milliseconds and electronically on a low level. This implies strong physical and IT protection.

On the other side, the complexity of the hardware as well as the protocols are comparable with traditional TN QKD architectures. The optics of the MTNs is equivalent to the optics of standard Trusted Nodes, however a synchronizing step is added.

In a first aspect of the invention, there is provided a QKD Communication intermediary component adapted to be placed between two remote QKD modules that are adapted to respectively send and/or receive quantum states to said QKD Communication intermediary component. Said QKD Communication intermediary component comprising: a post-processing unit, a synchronizing processing unit (SPU), at least two independent optical modules being adapted to prepare or measure the quantum states, which comprise raw key material to be exchanged with the two remote QKD modules, wherein the at least two independent optical modules send the information corresponding to the prepared and measured quantum states to the SPU, characterized in that the SPU is arranged to operate simultaneously with the first and second remote optical modules and the at least two independent optical modules so as to process said information received from the at least two independent optical modules and comprises at least one memory adapted to temporarily store data coming from one of the at least two optical modules until the data from the other optical module is input in the SPU and is adapted to erase the said at least one memory in the timescale of two consecutive detection events after outputting necessary information to enable a key establishment at the two remote QKD modules.

According to a first preferred embodiment, the at least two optical modules are receivers adapted to data encode quantum state measurement results, and the SPU comprises an SXOR component.

Preferably, the SXOR component comprises at least two inputs adapted to receive measurement results Zi from the detection of quantum state Izi> from the at least two optical modules, the memory which synchronizes the inputted data and release them when the data from both sides are stored, and an XOR element.

According to a second preferred embodiment, the at least two optical modules are emitters adapted to send preparation and timing information to the SPU and the SPU comprises at least one additional memory adapted to store quantum state preparation data and a SXOR component.

Preferably, the SPU is adapted to receive a time tag signal sent by the remote QKD modules through a feedback system, once they have detected the quantum sent by the corresponding optical modules.

Advantageously, once the SPU has received the time tag signal sent by the remote QKD modules, the additional memory is adapted to forward the corresponding information to the SXOR.

According to a third preferred embodiment, the at least two optical modules are a receiver and an emitter wherein the emitter is adapted to send preparation and timing information to the SPU and the receiver is adapted to data encode quantum state measurement results, and the SPU comprises at least one or two additional memories adapted to store quantum state preparation data and an SXOR component.

Preferably, the SPU further comprise a switch control adapted to bypass the SXOR based on status signals sent by the optical modules.

In a second aspect of the invention, there is provided a QKD communication system comprising concatenated QKD communication intermediate components according to the first aspect, connected to each other between two or more remote QKD modules.

Preferably, the QKD communication intermediate components of the first embodiment with at least one or two additional memories and the QKD communication intermediate components of the second embodiment are disposed in an alternated manner.

Advantageously, the QKD communication system comprises QKD communication intermediate components of the third embodiment linearly connected to each other, and a Control and Management System adapted to control the switch according to the task of the QKD communication intermediate component.

In a third aspect of the invention, there is provided a QKD Communication process comprising the QKD Communication intermediary component of the first embodiment, wherein in a first step, two remote QKD modules each hold an emitter module and prepare and send quantum states in the z and x bases to QKD Communication intermediary component, in a second step, the QKD Communication intermediary component has two independent receiver modules to measure in the given bases z and x and the measurement results including time tags are forwarded to the SPU, in a third step, the SPU forwards the measurement results of the x-basis measurements directly to a post-processing unit for the parameter estimation, in a fourth step, the z measurement events are forwarded to the SXOR, which takes inputs from the z detectors of both QKD links and if the memory is empty, the first incoming z event is stored in the memory, if next there is a measured z event from the other remote QKD module, the two z values are forwarded to an Exclusive OR (XOR) and output together with the two time stamps of the events. the memory is erased, and the above four steps are repeated.

Preferably, the QKD Communication process further comprises a fifth step, where the two remote QKD modules and QKD Communication intermediary component announce their preparation and measurement bases, respectively, and do key sifting, and a sixth step where the QKD Communication intermediary component announces the sifted output of the SXOR operations, which is used by two remote QKD modules to establish the raw key between them, such that based on the sifted x-basis information and the raw key, two remote QKD modules calculate the parameters

In a fourth aspect of the invention, there is provided a QKD Communication process comprising the QKD Communication intermediary component of the second embodiment, wherein in a first step, the QKD Communication intermediary component containing two emitter modules sends quantum states in the z or x basis to the two remote QKD modules, and the z values and the corresponding time tags are temporarily stored in a memory M, in a second step, the two remote QKD modules having each one receiver module to make measurements of the incoming quantum states, announce the time tags T of measurement events in real time to the QKD Communication intermediary component, the x measurements are treated separately, in a third step, when the QKD Communication intermediary component receives a time tag T from either one of the two remote QKD modules, M is checked whether the corresponding entry can be found: If yes, the QKD Communication intermediary component outputs this event (z value and time tag t) from the memory and forward it to the SXOR and M is erased, and the SXOR receives input from both memories M and only the parity information of the z state preparation is eventually forwarded to the post-processing unit.

## Brief description of the drawings

The invention will be described with reference to the drawings, in which the same reference numerals indicate the same feature. In particular,

- Figure 1 represents a conventional example of a single intermediate Trusted Node, which, for a certain time, stores a QKD key that is eventually distributed to the end points,

- Figure 2A represents a conventional Twin Field (TF) QKD where the intermediate node (Charlie) allows to establish a distributed key between Alice and Bob without learning any sensitive information,

- Figure 2B shows the concept of teleportation as part of repeater-based QKD network,

- Figure 3A and 3B show two different use case examples of the present invention,

- Figure 4 represents a first aspect of an intermediate MTN according to the present invention,

- Figures 5A to 5C represent a first preferred embodiment of the invention, an SXOR implemented in the single intermediate MTN according to the first preferred embodiment of the invention and the SPU of the first preferred embodiment of the invention, respectively,

- Figure 6A and 6B represent a second preferred embodiment of a single intermediate MTN according to the present invention,

- Figure 7 shows a second aspect of the invention where the QKD system comprises alternating Concatenated MTNs according to a first and second embodiment of the invention,

- Figure 8 shows a second aspect of the invention where the QD system comprises Concatenated MTNs according to a third embodiment of the invention.

- Figure 9 shows a schematic example of QKD network with two communication scenarios.

- Figure 10 shows an SPU with a Switch Control to process raw key material differently depending on the status of the input giving optical modules.

- Figure 11 shows an example of combining nodes comprising SPUs with optical modules emitting or receiving multipartite quantum states.

## Detailed Description

The invention will be described, for better understanding, with reference to specific embodiments. It will however be understood that the invention is not limited to the embodiments herein described but is rather defined by the claims and encompasses all embodiments which are within the scope of the claims.

A first aspect of the invention relates to a three node QKD network (Alice - Charlie - Bob) without a direct optical link between Alice and Bob. Charlie is the intermediate node and is a MTN. Charlie enables the distribution of a key between Alice and Bob, however, contrary to classical TN, the sensitive information at Charlie's side is only present in low-level electronics and is deleted at least on the time scale of microseconds to milliseconds. Only physical security at Charlie's node is required to avoid tampering of the hardware. Additionally, the classical communication from Charlie is preferably authenticated. Although, authentication is not necessary from the functionality point of view. It is preferable, to prevent certain types of attacks. While it is impossible for an attacker to learn about the raw key data from the output of the SPU, it could manipulate some data and combine this with other actions such as an attack on quantum channel + brute force attack on the final key, to learn about the key. Therefore, while the information is not sensitive, integrity of it must be guaranteed via authentication.

What is meant by "the sensitive information at Charlie's side is only present in low-level electronics" is that, in the QKD modules, there is a processing unit, for example an FPGA, which controls the optical modules (emitter and/or receiver) and processes all I/O information. The SXOR component, see below, is logically and physically separated from this processing unit by placing it spatially very close to the optical modules. This makes it impossible to learn about sensitive information by hacking into the system or by replacing any soft- or firmware. The only way to access sensitive information is to manipulate the system on the hardware level, e.g., by including a Trojan Horse in the design of electronics that allows to leak this information.

First we refer back to figure 1 which shows a conventional system where Charlie is a QKD communication node connected to two other nodes - communication intermediary component -, Alice and Bob - remote QKD modules -, with which he can exchange quantum information (with optical modules via a quantum channel in form of sending and/or receiving quantum states) and classical information. Alice and Bob communicate classically, but there is no direct quantum channel connecting them. The exchange of quantum states is used to transport raw key material, which is sensitive information, and to estimate certain parameters of the QKD protocol.

Charlie enables the establishment of secret and secure keys between Alice and Bob based on a protocol that prescribes the processing of the raw key material and the parameters. For prior art Trusted Node protocols, there are typically three phases to achieve this goal as depicted in Figure 1, where the three phases are executed by the three horizontal layers from bottom to top):

  1. Exchange of quantum states between Alice and Charlie, and between Charlie and Bob, respectively. Typically, one optical module prepares the quantum states (say, Alice) and send them to an adjacent node (Charlie), where the quantum states are measured. Preparation and measurement of quantum states are according to the given QKD protocol. Result: distribution of the raw key material and collection of data for the parameter estimation.

2. Processing of prepare-and-measure information collected and stored during the first phase. Result: establishment of a secret and secure key between Alice and Charlie, and between Charlie and Bob, respectively.

3. Key relaying through the key management system (KMS) to distribute a secret and secure key between Alice and Bob.

In this prior art embodiment, several modules inside Charlie (notably the post-processing module(s) and the key management module(s)) hold sensitive information (i.e., raw key material or the final key) during all three phases (i.e., on the timescale of seconds or longer), which require a high level of trust in the integrity and protection of Charlie.

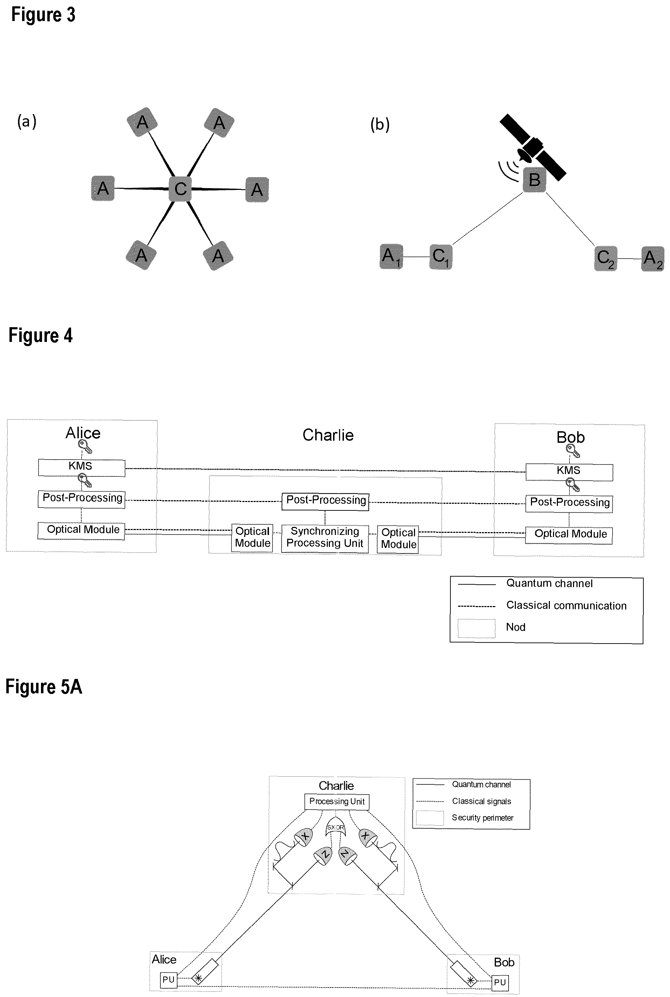

In order to solve this problem, the present invention, a preferred embodiment of which being depicted in figure 4, proposes a new network architecture with the intermediate node including a new processing unit called Synchronizing Processing Unit (SPU) placed in Charlie's node.

The SPU operates during phase 1 of the QKD protocol described earlier, that is, at the same time as the optical modules and synchronizes the output of the optical modules.

The SPU takes as an input quantum state preparation and measurement information that are output by Charlie's optical modules according to chosen QKD protocol. The raw key material is processed bitwise and erased by the SPU on a timescale related to the applied protocol and the conditions of the exchange. Typically, this is the time between two consecutive detection events in the optical modules, which is in the order of 10 microseconds to milliseconds. The output of the SPU, which is forwarded to the post-processing unit active in phase two, does therefore not contain raw key material.

To enable this processing, the SPU comprises one or several memories to temporarily store data coming from the optical modules. During phase one, the optical modules of Alice and Charlie, and of Charlie and Bob, respectively, are synchronized on an optical level; however not the two optical modules at Charlie. The memory in the SPU allows to synchronize data coming from these two optical modules by storing data coming from a first optical module until the data from a second optical module is input in the SPU. Then, the data from both optical modules is released and can be jointly processed. The memory itself is erased after outputting the data.

The output of the SPU is used in a phase two of the chosen QKD protocol. Charlie's post-processing module is involved in this phase, but importantly it does not hold and process any raw key material. This phase directly establishes a secret and secure key between Alice and Bob, which makes the key relaying of the third phase unnecessary.

Figures 3A and 3B show two possible use cases where the invention could be useful. The C nodes are MTNs, while the other nodes are end nodes or usual TNs. Figure 3A shows a star-topology network in a metropolitan area. Alice and Bob are two of the nodes marked by "A", Charlie is the central node C. The A nodes are relatively compact and price-efficient devices owned by or rented to the end user. Charlie is operated by a third-party provider (e.g., a telecom operator). In this configuration, any two A nodes can establish a QKD key via the node C. Figure 3B shows a ground station of a QKD satellite link which is seldomly the site where the end key consumer is located but it will probably be hosted by a third-party operator. Then, for example, the node A1 and B are establishing a key via an MTN at C1. Later B and A2 establish another shared key via an MTN at node C2. B as a usual TN mediates the establishment of a shared secret key between the two As.

Generally, the idea is to start off with a prepare-and-measure point-to-point QKD (P&M p2p QKD) protocol. This is called the Root Protocol in the following. An optical module that is capable of generating all required states of the Root Protocol with the prescribed probabilities is called source module or state preparation module. Likewise, an optical module that can measure all required bases with the required probabilities of the basis selection as foreseen in the Root Protocol is called detection module or measurement module.

For the present case, we consider protocols where only one basis is used to encode the raw key information (e.g., variants of BB84). Later, we generalize this idea. For concreteness, we assume that the key information is sent in the Z basis of a properly chosen degree of freedom. Quantum information sent in the other bases allows to estimate the maximal information that a potential eavesdropper may hold. In the following, we only consider one of these additional bases (called "X"), but the generalization to more bases is straightforward. In addition to the quantum channel, classical communication is necessary. Quantum and classical communication together are called QKD link in the following.

Figures 5A to 5C illustrate a first preferred embodiment of the invention where the optical modules at Charlie are both receivers, that is, its optical modules receive quantum states from Alice and Bob, respectively, measure them, and output the measurement results including time tagging information. Alice and Bob prepare quantum states from the same, predefined set of quantum states. Very generically, one distinguishes between quantum states $|z_i\rangle$ that encode (at least partially) raw key material, and quantum states $|x_j\rangle$ that do not encode raw key material or any other sensitive information (see Figure 5A).

In the single intermediate MTN (Charlie) arrangement described above, which is detecting the quantum states sent by Alice and Bob. The * represents the source including the preparation components like modulators. Processing Unit (PU) is a generic expression for the control and processing electronics of the optics modules.

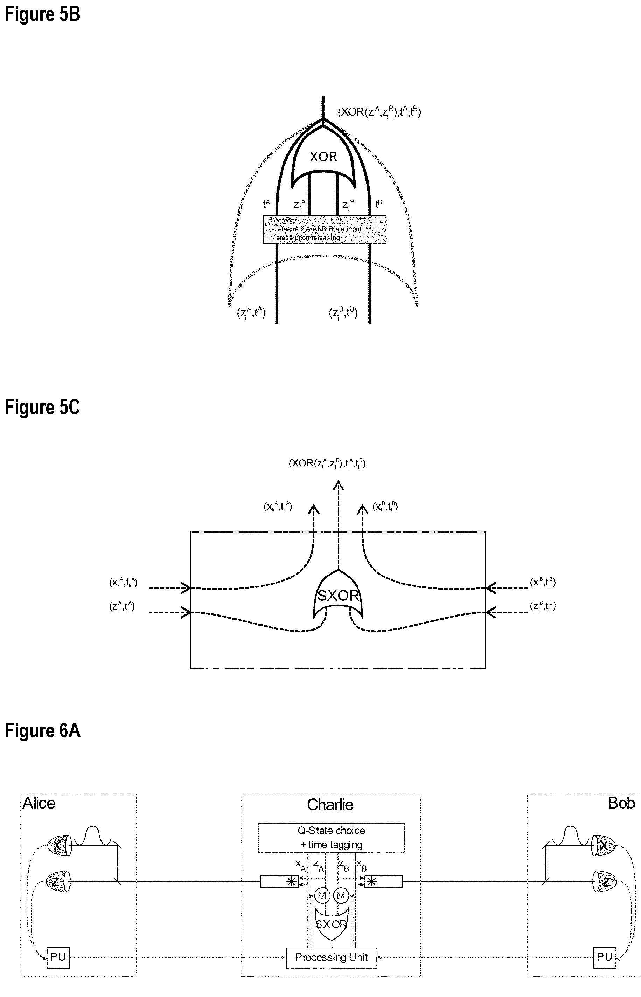

The X measurements at Charlie are done as in the Root protocols, while the results of Z measurements are forwarded to a Synchronizing Exclusive OR (SXOR) element which is shown in more details in Figure 5B. The Synchronizing Exclusive OR (SXOR), which is a central element of the invention, preferably comprises the two inputs (each consisting of a z value and a time stamp of the detection event) which are not arriving at the same time. Hence the first incoming input is temporally stored in a memory upon arrival of the second input. The output is an Exclusive OR (XOR) of the two z values plus both timestamps. The memory is erased upon releasing the output.

Only the parity information of two bits coming from the two QKD links is forwarded to the PU. In order to guarantee security, the values of the individual measurements are erased on the timescale of two consecutive detection events, i.e., typically in the order of tens of microseconds to milliseconds. This parity information is announced to Alice and Bob. With the additional X measurement results, Alice and Bob are then able to establish a secret key between them.

In summary, Alice and Bob establish a shared secret key through quantum and classical communication with an intermediate MTN Charlie where sensitive data at Charlie is kept on an electronically low level, i.e., before post processing, and is erased on short time scales.

The electronic boards at Charlie can be designed such that a potential attacker is in principle unable to access this information without manipulating or changing the hardware at Charlie. This implies that only physical protection is necessary at Charlie's node (device itself or environment).

The above embodiment will be described below in more details.

The optical modules at Charlie measure the incoming states and output the measurement results together with time tags of the measurement. This data is forwarded to the SPU, which simply forwards measurement results $x_i$ from detecting quantum states $|x_j\rangle$ to the post-processing unit, while measurement results $z_i$ from detecting quantum states $|z_i\rangle$ are forwarded to a Synchronizing Exclusive OR (SXOR) element shown in Figure 5A for the SXOR and Figure 5B and 5C for the SPU

More in details, figure 5B shows the Synchronizing Exclusive OR (SXOR) used in this preferred embodiment. This element takes data from the optical modules comprising prepare-and-measure information that contain raw key material $z_i$ and the time tagging information $t_i$. The superscripts A and B indicate whether the data is coming from the optical modules that are linked to Alice (l.h.s.) and Bob (r.h.s.), respectively. The memory synchronizes the incoming data and releases it when data from both sides are present in the memory. The memory itself is subsequently erased. The measurement result part of the output of the memory is forwarded to an Exclusive OR (XOR) element. Hence, the output (on the top side) of the SXOR is the parity information

$$\mathbf{XOR}(\mathbf{z_i^A}, \mathbf{z_j^B}^{'})$$ together with the time information

$$\mathbf{t_i^A}, \mathbf{t_j^B}$$ as shown in figures 5B and 5C.

On the other hand, Figure 5B shows the Synchronizing Processing Unit (SPU) instance when taking the output of two receiver modules at Charlie's node.

In this embodiment, a possible QKD protocol is the following where we assume that it is based on a Root Protocol.

Protocol I:

1. Alice and Bob each hold an emitter module and prepare and send quantum states in the Z and X bases to Charlie.

2. Charlie has two independent receiver modules to measure in the given bases Z and X. The measurement results including time tags are forwarded to the SPU.

3. The SPU forwards the measurement results of the X basis measurements directly to the post-processing unit for the parameter estimation.

4. The Z measurement events are forwarded to the SXOR, which takes inputs from the Z detectors of both QKD links. The SXOR consists of a small memory that can store exactly one event (Z value and time stamp) from each QKD link.

    a. If the memory is empty, the first incoming Z event (say, from Alice) is stored in the memory. (If a second Z event from Alice' quantum link is detected before a Z event is incoming from Bob's line, the new event replaces the old one in the memory.)
    b. If next there is a measured Z event from Bob, the two Z values are forwarded to an Exclusive OR (XOR) and output together with the two-time stamps of the events.
    c. The memory is erased.

5. The steps 1-4 are repeated often enough.

6. Alice, Bob and Charlie announce their preparation and measurement bases, respectively and do key sifting in real time like in the Root Protocol, that is, they keep only those *X* events where the pairs (Alice and Charlie) and (Bob and Charlie) each prepared and measured in the X basis, and they keep only those events where Alice, Bob and Charlie prepared and measured in the Z basis. The Z basis coincidences are the raw key.

7. Charlie announces the sifted output of the SXOR operations, which is used by Alice and Bob to establish the raw key between them.

Based on the sifted X basis information and the raw key, Alice and Bob calculate the parameters.

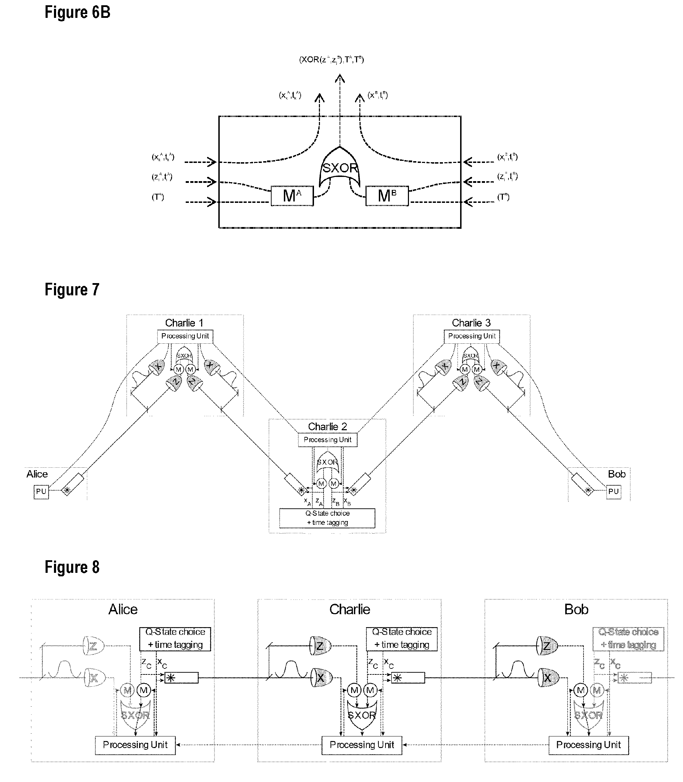

A second embodiment of the invention relates to an alternative architecture where the roles of preparation and detection are inversed, that is, Alice and Bob host the detection systems and Charlie has two sources to send quantum states to them as shown in figures 6A and 6B.

In this scenario where Charlie's node comprises two emitter modules, each connected to a receiver module in Alice' and Bob's node, respectively, the SPU introduced before can be used in this setting as well. Instead of data encoding measurement results, the optical modules of Charlie send preparation and timing information to the SPU. The type of data is identical, and a similar protocol as the one presented earlier is feasible.

However, there is typically a certain probability for Alice and Bob to not detect the quantum states that were prepared and sent by Charlie. Using an SPU like in Figure 5B and 5C would therefore mean to process many instances where a data point will be obsolete after sifting. This would lead to an effective limitation of the loss probability and consequently distance limitations.

To process only the quantum state preparation data in the SPU that was detected by the remote receiver modules, one can add additional memories M in the SPU that can store quantum state preparation data. In addition, the remote receiver modules communicate successful detection events T in real time to the SPU at Charlie's node without disclosing the measurement result. With this information, the corresponding preparation data is released from this memory to be forwarded to the SXOR.

Figure 6A and 6B show a SPU component comprising two additional elements in case both optical modules at Charlie's node are emitters. Then, the quantum state preparation data is temporarily stored in these memories. If, for example, Alice is detecting a quantum state, she sends the relevant time tag $T^A$ to Charlie's SPU to let the memory $M^A$ forward the corresponding information to the SXOR. The memory is subsequently erased. Similarly, memory $M^B$ releases preparation data to the SXOR upon notification $T^B$ from Bob's receiver module. A corresponding QKD protocol is the following.

Protocol II:

    1. Charlie contains two emitter modules and sends quantum states in the Z or X basis to Alice and Bob, respectively. The Z values and the corresponding time tags are temporarily stored in a memory M.

    2. Alice and Bob have each one receiver module to make measurements of the incoming quantum states. Alice and Bob announce the time tags T of measurement events in real time to Charlie (but not the measurement result).

    3. Like in Protocol I, the X measurements are treated separately.

    4. When Charlie receives a time tag T from either Alice or Bob, he looks in M whether the corresponding entry can be found. If yes, he outputs this event (Z value and time tag t) from the memory and forward it to the SXOR. Then, he erases M. Hence, the SXOR receives input from both memories M in Figure 6A or 6B and only the parity information of the Z state preparation is eventually forwarded to the post-processing unit.

The remaining steps of the protocol are the same as for Protocol I.

In this setup where the roles of preparation and measurement are inversed, the additional memories inserted at Charlie are preferably additional short-term memories and a feedback system from Alice and Bob that immediately communicates the time stamp of a detection event to Charlie is added. This feedback system uses this information to release the relevant event from M and forward it to the SXOR.

According to the third aspect of the invention, the concept of a single MTN can be concatenated to achieve larger total distances. There are two basic designs possible as depicted in Figure 7 and Figures 8, respectively. Conceptually, it is straightforward to combine the two protocols described earlier to build up a chain of quantum and classical communication, where eventually all intermediate MTNs are announcing parity information about z events to establish a shared raw key between the end nodes.

For performance reasons, it is recommended for both approaches described below to do a real-time sifting, that is, for each optical link, the input for the transmitter and the output for the receiver modules in the Z basis are temporarily stored in memories inside the SPU (like in the memories $M^A$ and $M^B$ depicted in Figure 6B). Upon detection of a Z event in a receiver module (say Charlie 1 by receiving a quantum state from Charlie 2 in Figure 7), the respective node informs the sending node about the event (without revealing the measurement result). If the relevant quantum state from the transmitter (Charlie 2 in this example) was prepared in the Z basis, then the said transmitting node confirms the match in preparation and measurement basis of the event to the receiver. In this case, both, transmitter and receiver, let the respective information forwarded to their SXOR, while the memories themselves are erased.

Figure 7 represents Concatenated MTNs I where each intermediate MTN either hosts two detection modules or two source modules as in Figures 4 (with additional memories) and Figure 6A/6B, respectively. These nodes eventually output parity information to the end nodes Alice and Bob.

Figure 8 shows a different type of MTN as Concatenated MTNs II. In this embodiment, each node is an identical transceiver consisting of one detection and one source module. The Z measurement events, and the Z preparation events (after receiving detection feedback from the receiving neighboring node) are forwarded to the SXOR element. Regarding information about the Z events, the intermediate nodes only announce parity information to the end nodes. Note that the end nodes, if structurally identical, bypass the SXOR element. Here, the unused components are greyed out. This concept is advantages compared to Figure 7 in terms of network architecture because structurally identical modules can be used at every node. The relevant protocol for this architecture is a blend between Protocol I and Protocol II, which can be easily derived for this situation.

In Figure 8B we see the potential implementation of the SPU in case of Charlie's node comprising an emitter and a receiver module. The input on the left-hand side is coming from the emitter, the input on the right-hand side from the receiver. Here only one memory $M^A$ is implemented but MTN with two additional memories as described above can be used as well. The memory $M^A$ temporarily stores preparation information upon notification of a successful detection event $T^A$ sent by Alice.

For practical reasons, it becomes useful for each node to keep a (momentary) record of all sent values and all receptions, and each needs to be confirmed via sifting with adjacent nodes before going to processing. Besides, a value waiting to be XORed has to be processed before it is replaced with another. This means that if A-B-C-D are communicating and C is waiting for something from D, then even if it receives something from B it has to ignore it.

Above, MTNs were so far only described as being used in a linear chain of QKD links as represented in figures 7 and 8, the concept can be easily extended to arbitrary network topologies.

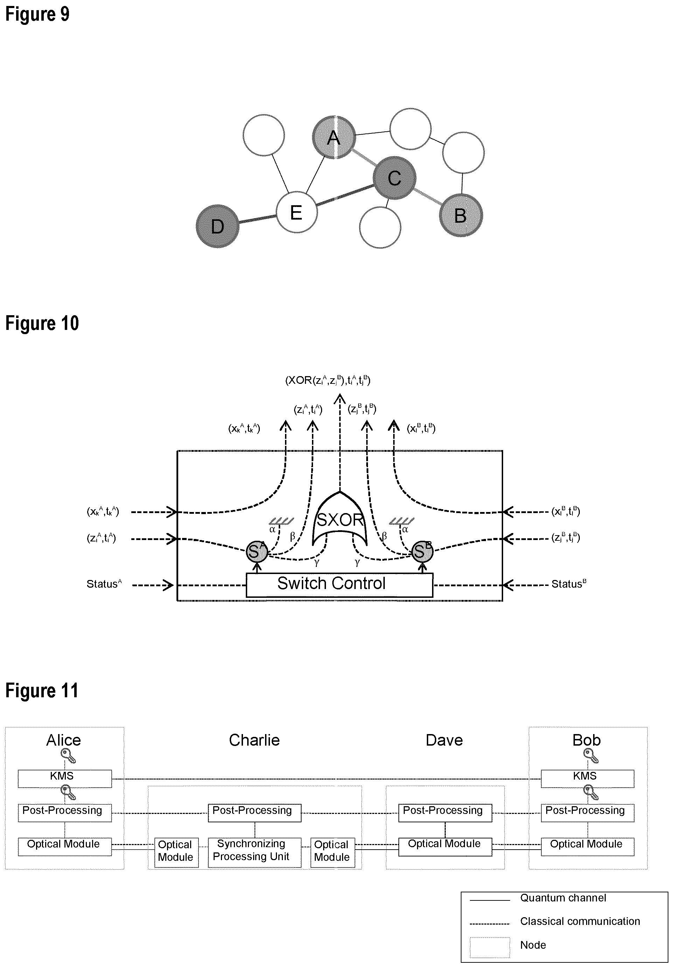

There are several ways to generalize MTNs in this respect. For example, thanks to this system it is possible to use transceivers, as depicted in Figure 9, at each network node and allow for dynamic alignment and calibration between any two neighboring nodes, where the network controller decides for each link which node supplies the source and which node the detection module. Then, from an operational point of view, it is advantageous to allow the source or detector modules to bypass the SXOR if the respective node is an endpoint of the total link as Alice and Bob in Figure 9, for example. In a QKD network based on MTNs with arbitrary network topology, this allows to distribute secure keys between any two nodes in the network using the MTN concept. Clearly, from a security point of view, one must make sure that bypassing the SXOR does not introduce a security loophole. There are several possibilities to achieve this security, for example, by only allowing one source or detection module being active while the SXOR is bypassed. SXOR for more than one basis. It is straightforward to extend the idea to situations where the Root Protocol specifies more than one basis that encodes information for the raw key establishment. Let us denote these bases by $Z_1, ..., Z_n$. Like in Figure 4, Figure 6, and Figure 8, each quantum signal preparation and/or measurement results in the basis $Z_i$ ($i = 1, ..., n$) is used as input for an SXOR.

Another aspect of the invention relates to communication networks and more particularly to MTN networks.

So far, we focused on scenarios, where one or several intermediate nodes Charlie are connected via quantum and classical channels to Alice and Bob, respectively. At least three types of scenarios were discussed in the previous sections depending on the kind of optical modules (emitter or receiver) present at Charlie's node. In any case, one cannot establish a secret key between an intermediate node and a second node (end or intermediate). However, in a more generic setting, the node Charlie is embedded in a QKD network where any two nodes might want to establish a secret and private key based on QKD.

First, the nodes must comprise optical modules that are suited to interact with optical modules form adjacent nodes. This is the same requirement as in prior art Trusted Node QKD networks. For example, for a node to perform a QKD protocol with an adjacent node comprising an emitter, the said node is required to comprise a receiver module.

Second, generically it is required that a node becomes the end node in a first communication scenario and an intermediate node in a subsequent second communication scenario (like node C in Figure 9. Then, the SPU component present in node C needs to comprise a mechanism that allows the node to participate in both scenarios.

Figure 9 shows a schematic example of QKD network with two communication scenarios. In a first scenario, the nodes D and C want to establish a shared and private QKD key via the intermediate node E. In a second scenario, the nodes A and B want to establish a shared and private QKD key via the intermediate node C. The network is supposed to allow for both scenarios if sequentially executed.

In an example of such a mechanism for node C in Figure 9, we assume that there is a network control and management system (CMS) in place that sets and triggers the first or the second communication scenario. Starting with the first communication scenario, the local control module switches on two optical modules at C that were selected to co-execute the QKD protocol. As C is an intermediate node, the output of the said optical modules related to raw key material must pass the SXOR element in C's SPU. Later, when the network CMS lets execute the second communication scenario, only one optical module must participate in, whose output must not go into a SXOR element.

This functionality can be achieved with a Switch Control inside the SPU represented in Figure 10, which takes for example two status bits from the two said optical modules. In Figure 10, for clarity reasons the additional memories M are not shown. Here, we define Status = 0 if the optical module is off and Status = 1 if the corresponding optical module is on. Depending on theses bit values, the Switch Control processes the input from the optical modules differently (see Figure 10):

In Figure 10: $\alpha$: block input, $\beta$: output signal directly and $\gamma$: forward input to SXOR.

(i) Table 1. Truth table of Switch Control.

| Status$^A$ | Status$^B$ | Switch S$^A$ | Switch S$^B$ |
|---|---|---|---|
| 0 | 0 | $\alpha$ | $\alpha$ |
| 0 | 1 | $\alpha$ | $\beta$ |
| 1 | 0 | $\beta$ | $\alpha$ |
| 1 | 1 | $\gamma$ | $\gamma$ |

According to Figure 11, an example of combining nodes comprising SPUs with optical modules emitting or receiving multipartite quantum states is shown. For instance, Dave comprises a source of entangled quantum states sent to Charlie and Bob, who both hold receiver modules. In another instance, Dave comprises a detector module like in MDI or Twin-Field QKD, that is, where quantum states received from Charlie and Bob are measured as joint quantum states.

Let us consider a concrete example like in Figure 11, where Alice and Bob each comprise a detection module, Charlie is an MTN comprising a source module, which is linked to Alice, and a detection module. Therefore, Charlie's SPU could be based on the concept of Figure 8B. Dave comprises a source of entangled photon pairs, that is, two spatial output modes, where one mode is connected to Charlie and the other to Bob. Let us assume that the Root Protocol used between Alice and Charlie and the entanglement-based protocol used between Charlie, Dave and Bob are chosen to have comparable bases (e.g., each protocol has a measurement basis z to establish the raw key and a basis x to estimate the security parameters). Then, they can be combined as follows.

1. Dave emits quantum signals to Charlie and Bob, which are typically entangled.
2. In the same period, Charlie sends quantum signals to Alice according to the Root Protocol.
3. Alice measures the incoming quantum signals from Charlie according to the Root Protocol. Charlie and Bob measure the incoming quantum signals from Bob according to the entanglement-based protocol.
4. Charlie and Bob exchange classical information about the detection events (but not the result of them). Only those measurement results are forwarded for further processing where both, Charlie and Bob, had a detection for the same quantum signal from Dave.
5. Charlie's SPU processes the source preparation data for the quantum states sent to Alice and the measurement results from quantum states received from Dave like described earlier.
6. The remainder of the protocol is as previously described.

There are further network architectures possible where nodes comprising SPUs are connected to network domains based on the quantum repeater paradigm. This implies for instance that, in Figure 11, the optical modules at Dave and Bob and one optical module at Charlie form a repeater-based network that allows to generate high-fidelity entangled states between Charlie and Bob. Subsequent measurements of these states lead to strongly correlated outcomes between said nodes. Charlie's SPU directly processes the output of the said optical module together with input coming from a second optical module that is connected to node Alice. This opens the way for combining two paradigms, Trusted Nodes and the repeater-based nodes, with maximal practical security.

The scope of the present invention is defined by the claims as appended.

**Claims**

1. A QKD Communication intermediary component adapted to be placed between two remote QKD modules that are adapted to respectively send and/or receive quantum states to said QKD Communication intermediary component. Said QKD Communication intermediary component comprising:

 - a post-processing unit,
 - a synchronizing processing unit, SPU,
 - at least two independent optical modules being adapted to prepare or measure the quantum states, which comprise raw key material to be exchanged with the two remote QKD modules, wherein the at least two independent optical modules send the information corresponding to the prepared and measured quantum states to the synchronizing processing unit, **characterized in that** the synchronizing processing unit is arranged to operate simultaneously with the two remote QKD modules and the at least two independent optical modules so as to process said information received from the at least two independent optical modules and comprises at least one memory adapted to temporarily store data coming from one of the at least two optical modules until the data from the other optical module(s) is input in the synchronizing processing unit and is adapted to erase the said at least one memory in the timescale of two consecutive detection events after outputting necessary information to enable a key establishment at the two remote QKD modules.

2. A QKD communication intermediate component according to claim 1, wherein the at least two optical modules are receivers adapted to data encode quantum state measurement results, and the SPU comprises a SXOR component.

3. A QKD communication intermediate component according to claim 2, wherein the SXOR component comprises:

- at least two inputs adapted to receive measurement results $Z_i$ from the detection of quantum state $|z_i\rangle$ from the at least two optical modules,
- wherein the memory is adapted to synchronise the inputted data and release them when the data from both sides are stored, and
- an XOR element.

4. A QKD communication intermediate component according to claim 1, wherein the at least two optical modules are emitters adapted to send preparation and timing information to the SPU and the SPU comprises at least one additional memory adapted to store quantum state preparation data and a SXOR component.

5. A QKD communication intermediate component according to claim 4, wherein the SPU is adapted to receive a time tag signal sent by the remote QKD modules through a feedback system, once they have detected the quantum sent by the corresponding optical modules.

6. A QKD communication intermediate component according to claim 5, wherein once the SPU has received the time tag signal sent by the remote QKD modules, the additional memory is adapted to forward the corresponding information to the SXOR.

7. A QKD communication intermediate component according to claim 1, wherein the at least two optical modules are a receiver and an emitter wherein the emitter is adapted to send preparation and timing information to the SPU and the receiver is adapted to data encode quantum state measurement results, and the SPU comprises at least one or two additional memories adapted to store quantum state preparation data and an a SXOR component.

8. A QKD communication intermediate component according to claim 1 or 7, wherein the SPU further comprises a switch control adapted to bypass the SXOR based on status signals sent by the optical modules.

9. Communication system comprising concatenated QKD communication intermediate components according to any one of claims 1 to 8 connected to each other between two remote QKD modules.

10. Communication system according to claim 9, wherein the QKD communication intermediate components of claims 2 or 3 and the QKD communication intermediate components of claims 4-6 are disposed in an alternated manner and wherein the system further comprises a Control and Management System adapted to control the switch of claim 8 according to the task of the QKD communication intermediate component.

11. Communication system according to claim 9 comprising QKD communication intermediate components of claim 7 linearly connected to each other, and further comprising a Control and Management System adapted to control the switch of claim 8 according to the task of the QKD communication intermediate component.

12. QKD Communication process comprising the QKD Communication intermediary component of claims 1 to 3, wherein

- in a first step, preparing and sending by two remote QKD modules each holding an emitter module, quantum states in the Z and X bases to the QKD Communication intermediary component.
- in a second step, by the QKD Communication intermediary component having two independent receiver modules to measure in the given bases Z and X, and forwarding corresponding Z and X measurement results including time tags to the SPU.
- in a third step, forwarding, by the SPU, the measurement results of the X basis measurements directly to a post-processing unit for parameter estimation.
- in a fourth step, forwarding the Z measurement results to the SXOR, which takes inputs from the Z detectors of both QKD links and if the memory is empty, storing the first incoming Z measurement result in the memory

a. If next there is a Z measurement result from the other remote QKD module, forwarding the two measurement results to an Exclusive OR (XOR), them being output together with the two-time stamps of the measurement results

b. erasing the memory

- repeating the above four steps.

13. QKD Communication process according to claim 12, further comprising

- in a fifth step, announcing, by the two remote QKD modules and the QKD Communication intermediary component their preparation and measurement bases, respectively, and performing key sifting,
- in a sixth step, announcing by the QKD Communication intermediary component the sifted output of the SXOR operations, which is used by the two remote QKD modules to establish the raw key" between them.

14. QKD Communication process comprising the QKD Communication intermediary component of any one of claims 1 and 4 to 6, wherein

- in a first step, sending by the QKD Communication intermediary component containing two emitter modules quantum states in the Z or X basis to two remote QKD modules, and temporarily storing the Z values and the corresponding time tag in a memory M consisting of distinct memories Ma and Mb, one of each corresponding to one of the remote QKD modules;
- in a second step, announcing by the two remote QKD modules having each one receiver module to make measurements of the incoming quantum states, time tags T of corresponding Z and X measurements in real time to the QKD Communication intermediary component, wherein the X measurements are treated separately.
- in a third step, when the QKD Communication intermediary component receives a time tag T from either one of the two remote QKD modules, checking memory M whether a corresponding entry can be found: If yes outputting by the QKD Communication intermediary component value and time tag t of the corresponding entry from the memory, forwarding it to the SXOR and erasing memory wherein the SXOR receives input from both memories Ma and Mb and wherein only the parity information of the z state preparation is eventually forwarded to the post-processing unit.

15. QKD Communication process comprising the QKD Communication intermediary component of any one of claims 1 and 7 comprising the steps of the QKD Communication process according to claims 12-14.

16. QKD Communication process according to claims 12 to 15, wherein the QKD modules carry out a sifting step in real time.

**Patentansprüche**

1. QKD-Kommunikations-Zwischenkomponente, die dazu geeignet ist, zwischen zwei entfernten QKD-Modulen platziert zu werden, die jeweils dazu geeignet sind, Quantenzustände an die QKD-Kommunikations-Zwischenkomponente zu senden und/oder von dieser zu empfangen, wobei die QKD-Kommunikations-Zwischenkomponente umfasst:

- eine Nachbearbeitungseinheit,
- eine Synchronisierungs-Verarbeitungseinheit (SVU),
- zumindest zwei unabhängige optische Module, die dazu geeignet sind, die Quantenzustände vorzubereiten oder zu messen, die Rohschlüsselmaterial umfassen, das mit den zwei entfernten QKD-Modulen ausgetauscht werden soll, wobei die zumindest zwei unabhängigen optischen Module die den vorbereiteten und gemessenen Quantenzuständen entsprechenden Informationen an die Synchronisierungs-Verarbeitungseinheit senden, **dadurch gekennzeichnet, dass**

die Synchronisierungs-Verarbeitungseinheit so angeordnet ist, dass sie gleichzeitig mit den zwei entfernten QKD-Modulen und den zumindest zwei unabhängigen optischen Modulen arbeitet, um die von den zumindest zwei unabhängigen optischen Modulen empfangenen Informationen zu verarbeiten, und

zumindest einen Speicher umfasst, der dazu geeignet ist, Daten, die von einem der zumindest zwei optischen Module kommen, temporär zu speichern, bis die Daten von dem/den anderen optischen Modul(en) in die Synchronisierungs-Verarbeitungseinheit eingegeben werden, und der dazu geeignet ist, den zumindest einen Speicher innerhalb der Zeitspanne von zwei aufeinanderfolgenden Erfassungsereignissen zu löschen, nachdem er notwendige Informationen ausgegeben hat, um eine Schlüsselerstellung an den zwei entfernten QKD-Modulen zu ermöglichen.

2. QKD-Kommunikations-Zwischenkomponente nach Anspruch 1, wobei die zumindest zwei optischen Module Empfänger sind, die dazu geeignet sind, Quantenzustands-Messergebnisse in Daten zu kodieren, und die SVU eine SXOR-Komponente umfasst.

3. QKD-Kommunikations-Zwischenkomponente nach Anspruch 2, wobei die SXOR-Komponente umfasst:

- zumindest zwei Eingänge, die dazu geeignet sind, Messergebnisse $Z_i$ aus der Detektion des Quantenzustands $|z_i>$ von den zumindest zwei optischen Modulen zu empfangen,
- wobei der Speicher dazu geeignet ist, die eingegebenen Daten zu synchronisieren und sie freizugeben, wenn die Daten von beiden Seiten gespeichert sind, und
- ein XOR-Element.

4. QKD-Kommunikations-Zwischenkomponente nach Anspruch 1, wobei die zumindest zwei optischen Module Sender sind, die dazu geeignet sind, Vorbereitungs- und Zeitsteuerungsinformationen an die SVU zu senden, und die SVU zumindest einen zusätzlichen Speicher, der dazu geeignet ist, Quantenzustands-Vorbereitungsdaten zu speichern, und eine SXOR-Komponente umfasst.

5. QKD-Kommunikations-Zwischenkomponente nach Anspruch 4, wobei die SVU dazu geeignet ist, ein Zeitmarkensignal zu empfangen, das von den entfernten QKD-Modulen über ein Rückkopplungssystem gesendet wird, sobald diese das von den entsprechenden optischen Modulen gesendete Quantum erkannt haben.

6. QKD-Kommunikations-Zwischenkomponente nach Anspruch 5, wobei, sobald die SVU das von den entfernten QKD-Modulen gesendete Zeitmarkensignal empfangen hat, der zusätzliche Speicher dazu geeignet ist, die entsprechenden Informationen an das SXOR weiterzuleiten.

7. QKD-Kommunikations-Zwischenkomponente nach Anspruch 1, wobei die zumindest zwei optischen Module ein Empfänger und ein Sender sind, wobei der Sender dazu geeignet ist, Vorbereitungs- und Zeitsteuerungsinformationen an die SVU zu senden, und der Empfänger dazu geeignet ist, die Ergebnisse der Quantenzustandsmessung in Daten zu kodieren, und die SVU zumindest einen oder zwei zusätzliche Speicher, die dazu geeignet sind, Quantenzustands-Vorbereitungsdaten zu speichern, und eine SXOR-Komponente umfasst.

8. QKD-Kommunikations-Zwischenkomponente nach Anspruch 1 oder 7, wobei die SVU ferner eine Schaltsteuerung umfasst, die dazu geeignet ist, das SXOR auf der Grundlage von Statussignalen, die von den optischen Modulen gesendet werden, zu umgehen.

9. Kommunikationssystem, das verkettete QKD-Kommunikations-Zwischenkomponenten nach den Ansprüchen 1 bis 8 umfasst, die zwischen zwei entfernten QKD-Modulen miteinander verbunden sind.

10. Kommunikationssystem nach Anspruch 9, wobei die QKD-Kommunikations-Zwischenkomponenten nach den Ansprüchen 2 oder 3 und die QKD-Kommunikations-Zwischenkomponenten nach den Ansprüchen 4 bis 6 auf alternierende Weise angeordnet sind, und wobei das System ferner ein Steuerungs- und Verwaltungssystem umfasst, das dazu geeignet ist, den Schalter nach Anspruch 8 in Übereinstimmung mit der Aufgabe der QKD-Kommunikations-Zwischenkomponente zu steuern.

11. Kommunikationssystem nach Anspruch 9, das QKD-Kommunikations-Zwischenkomponenten nach Anspruch 7 umfasst, die linear miteinander verbunden sind, und das ferner ein Steuerungs- und Verwaltungssystem umfasst, das dazu geeignet ist, den Schalter nach Anspruch 8 in Übereinstimmung mit der Aufgabe der QKD-Kommunikations-Zwischenkomponente zu steuern.

12. QKD-Kommunikationsverfahren, welches die QKD-Kommunikations-Zwischenkomponente nach den Ansprüchen 1 bis 3 umfasst, wobei

- in einem ersten Schritt durch zwei entfernte QKD-Module, die jeweils ein Sendermodul enthalten, Quantenzustände in den Z- und X-Basen vorbereitet und an die QKD-Kommunikations-Zwischenkomponente gesendet werden,
- in einem zweiten Schritt die QKD-Kommunikations-Zwischenkomponente zwei unabhängige Empfängermodule zum Messen in den gegebenen Basen Z und X aufweist und die entsprechenden Z- und X-Messergebnisse einschließlich Zeitmarken an die SVU weiterleitet,
- in einem dritten Schritt die Messergebnisse der X-Basis-Messungen durch die SVU direkt an eine Nachbearbeitungseinheit zur Parameterschätzung weitergeleitet werden,
- in einem vierten Schritt die Z-Messergebnisse an das SXOR weitergeleitet werden, welches Eingaben von den Z-Detektoren beider QKD-Links empfängt und, wenn der Speicher leer ist, das erste eingehende Z-Messergebnis in dem Speicher gespeichert wird,

a. wenn als nächstes ein Messergebnis von dem anderen entfernten QKD-Modul vorliegt, die zwei Z-Messergebnisse an eine Exklusiv-ODER-Funktion (XOR) weitergeleitet und zusammen mit den zweiten Zeitstempeln der Messergebnisse ausgegeben werden,
b. Löschen des Speichers,

- Wiederholen der vorstehenden vier Schritte.

13. QKD-Kommunikationsverfahren nach Anspruch 12, welches ferner umfasst

- in einem fünften Schritt die Meldung der Vorbereitungs- und Messbasen durch die zwei entfernten QKD-Module und die QKD-Kommunikations-Zwischenkomponente sowie die Durchführung einer Schlüssel-Sichtung,
- in einem sechsten Schritt die Meldung der gesiebten Ausgabe der SXOR-Operationen durch die QKD-Kommunikations-Zwischenkomponente, die von den zweiten entfernten QKD-Modulen verwendet wird, um den Rohschlüssel zwischen ihnen zu erstellen.

14. QKD-Kommunikationsverfahren, welches die QKD-Kommunikations-Zwischenkomponente nach einem der Ansprüchen 1 und 4 bis 6 umfasst, wobei

- in einem ersten Schritt die Quantenzustände in der Z- oder X-Basis durch die QKD-Kommunikations-Zwischenkomponente, die zwei Sendermodule enthält, an zwei entfernte QKD-Module gesendet werden, und die Z-Werte und die entsprechenden Zeitmarken temporär in einem Speicher M gespeichert werden, der aus unterschiedlichen Speichern Ma und Mb besteht, von denen jeweils einer einem der entfernten QKD-Module entspricht,
- in einem zweiten Schritt die Zeitmarken T der entsprechenden Z- und X-Messungen durch die zwei entfernten QKD-Module, die jeweils ein Empfängermodul aufweisen, um Messungen der eingehenden Quantenzustände durchzuführen, in Echtzeit an die QKD-Kommunikations-Zwischenkomponente gemeldet werden,
- wobei die X-Messungen separat behandelt werden,
- in einem dritten Schritt, wenn die QKD-Kommunikations-Zwischenkomponente eine Zeitmarke T von einem der zwei entfernten QKD-Module empfängt, der Speicher M überprüft, ob ein entsprechender Eintrag gefunden werden kann, bei ja der Z-Wert und die Zeitmarke t des entsprechenden Eintrags durch die QKD-Kommunikations-Zwischenkomponente aus dem Speicher ausgegeben werden, an das SXOR weitergeleitet werden und dann der Speicher M gelöscht wird, wobei das SXOR Eingaben von beiden Speichern Ma und Mb erhält und wobei am Ende nur die Paritätsinformationen der z-Zustandsvorbereitung an die Nachbearbeitungseinheit weitergeleitet werden.

15. QKD-Kommunikationsverfahren, welches die QKD-Kommunikations-Zwischenkomponente nach einem der Ansprüche 1 und 7 umfasst, und welches die Schritte des QKD-Kommunikationsprozesses nach den Ansprüchen 12 bis 14 umfasst.

16. QKD-Kommunikationsprozess nach den Ansprüchen 12 bis 15, wobei die QKD-Module einen Sichtungsschritt in Echtzeit ausführen.

**Revendications**

1. Composant intermédiaire de communication QKD adapté pour être placé entre deux modules QKD distants qui sont adaptés pour envoyer et/ou recevoir respectivement des états quantiques vers ledit composant intermédiaire de communication QKD, ledit composant intermédiaire de communication QKD comprenant :

- une unité de post-traitement,
- une unité de traitement de synchronisation, SPU,
- au moins deux modules optiques indépendants adaptés à la préparation ou à la mesure des états quantiques, qui comprennent le matériau de clé brut à échanger avec les deux modules QKD distants, dans lesquels les au moins deux modules optiques indépendants envoient les informations correspondant aux états quantiques préparés et mesurés à l'unité de traitement de synchronisation, **caractérisé en ce que**

l'unité de traitement de synchronisation est conçue pour fonctionner simultanément avec les deux modules QKD distants et les au moins deux modules optiques indépendants afin de traiter les informations reçues des au moins deux modules optiques indépendants, et comprend au moins une mémoire adaptée pour stocker temporairement les données provenant d'au moins un des deux modules optiques jusqu'à ce que les données provenant de l'autre ou des autres modules optiques soient introduites dans l'unité de traitement de synchronisation et est adaptée pour effacer ladite au moins une mémoire sur l'échelle de temps de deux événements de détection consécutifs après avoir émis les informations nécessaires pour permettre l'établissement d'une clé au niveau des deux modules QKD distants.

2. Composant intermédiaire de communication QKD selon la revendication 1, dans lequel les au moins deux modules optiques sont des récepteurs adaptés au codage des données des résultats de mesure de l'état quantique, et le SPU comprend un composant SXOR.

3. Composant intermédiaire de communication QKD selon la revendication 2, dans lequel le composant SXOR comprend :

- au moins deux entrées adaptées pour recevoir les résultats de mesure Zi de la détection de l'état quantique |zi> des au moins deux modules optiques,
- dans lequel la mémoire est adaptée pour synchroniser les données entrées et les libérer lorsque les données des deux côtés sont stockées, et
- un élément XOR.

4. Composant intermédiaire de communication QKD selon la revendication 1, dans lequel les au moins deux modules optiques sont des émetteurs adaptés pour envoyer des informations de préparation et de synchronisation au SPU et le SPU comprend au moins une mémoire supplémentaire adaptée pour stocker les données de préparation de l'état quantique et un composant SXOR.

5. Composant intermédiaire de communication QKD selon la revendication 4, dans lequel le SPU est adapté pour recevoir un signal d'étiquette temporelle envoyé par les modules QKD distants par l'intermédiaire d'un système de rétroaction, une fois qu'ils ont détecté le quantum envoyé par les modules optiques correspondants.

6. Composant intermédiaire de communication QKD selon la revendication 5, dans lequel, une fois que le SPU a reçu le signal d'étiquette temporelle envoyé par les modules QKD distants, la mémoire supplémentaire est adaptée pour transmettre les informations correspondantes au SXOR.

7. Composant intermédiaire de communication QKD selon la revendication 1, dans lequel les au moins deux modules optiques sont un récepteur et un émetteur, l'émetteur étant adapté pour envoyer des informations de préparation et de synchronisation au SPU et le récepteur étant adapté pour coder les données des résultats de la mesure de l'état quantique, et le SPU comprenant au moins une ou deux mémoires supplémentaires adaptées pour stocker les données de préparation de l'état quantique et un composant SXOR.

8. Composant intermédiaire de communication QKD selon la revendication 1 ou 7, dans lequel le SPU comprend en outre une commande de commutation adaptée pour contourner le SXOR sur la base des signaux d'état envoyés par les modules optiques.

9. Système de communication comprenant des composants intermédiaires de communication QKD concaténés selon l'une des revendications 1 à 8, connectés l'un à l'autre entre deux modules QKD distants.

10. Système de communication selon la revendication 9, dans lequel les composants intermédiaires de communication QKD des revendications 2 ou 3 et les composants intermédiaires de communication QKD des revendications 4 à 6 sont disposés de manière alternée et dans lequel le système comprend en outre un système de contrôle et de gestion adapté pour commander le commutateur de la revendication 8 en fonction de la tâche du composant intermédiaire de communication QKD.

11. Système de communication selon la revendication 9, comprenant des composants intermédiaires de communication QKD de la revendication 7 connectés linéairement les uns aux autres, et comprenant en outre un système de contrôle et de gestion adapté pour contrôler le commutateur de la revendication 8 en fonction de la tâche du composant intermédiaire de communication QKD.

12. Processus de communication QKD comprenant le composant intermédiaire de communication QKD des revendications 1 à 3, dans lequel

- dans une première étape, préparation et envoi par deux modules QKD distants détenant chacun un module émetteur, d'états quantiques dans les bases Z et X au composant intermédiaire de communication QKD,
- dans une deuxième étape, par le composant intermédiaire de communication QKD ayant deux modules récepteurs indépendants pour mesurer dans les bases données Z et X, et transmettre les résultats de mesure Z et X correspondants, y compris les étiquettes temporelles, au SPU,
- dans une troisième étape, le SPU transmet les résultats des mesures de la base X directement à une unité de post-traitement pour l'estimation des paramètres,
- dans une quatrième étape, transmission des résultats des mesures Z au SXOR, qui reçoit les entrées des détecteurs Z des deux liaisons QKD et, si la mémoire est vide, stocke le premier résultat de mesure Z entrant dans la mémoire,

a. S'il y a ensuite un résultat de mesure provenant de l'autre module QKD distant, il transmet les deux résultats de mesure Z à un OU exclusif (XOR), qui les émet avec les deux horodatages des résultats de mesure,
b. Effacement de la mémoire.

- répétition des quatre étapes précédentes.

13. Procédé de communication QKD selon la revendication 12, comprenant en outre

- dans une cinquième étape, l'annonce, par les deux modules QKD distants et le composant intermédiaire de communication QKD, de leurs bases de préparation et de mesure, respectivement, et l'exécution d'un tamisage des clés,
- dans une sixième étape, l'annonce par le composant intermédiaire de communication QKD de la sortie tamisée des opérations SXOR, qui est utilisée par les deux modules QKD distants pour établir la clé brute entre eux.

14. Procédé de communication QKD comprenant le composant intermédiaire de communication QKD de l'une des revendications 1 et 4 à 6, dans lequel

- dans une première étape, envoi par le composant intermédiaire de communication QKD contenant deux modules émetteurs d'états quantiques dans la base Z ou X à deux modules QKD distants, et stockage temporaire des valeurs Z et des marqueurs temporels correspondants dans une mémoireM constituée de mémoires distinctes Ma et Mb, l'une d'entre elles correspondant à l'un des modules QKD distants,
- dans une deuxième étape, annonce par les deux modules QKD distants ayant chacun un module récepteur pour effectuer des mesures des états quantiques entrants, des marqueurs temporelsT des mesures Z et X correspondantes en temps réel au composant intermédiaire de communication QKD,
- dans lequel les mesures X sont traitées séparément,
- dans une troisième étape, lorsque le composant intermédiaire de communication QKD reçoit une balise temporellet de l'un ou l'autre des deux modules QKD distants, il vérifie dans la mémoireM si une entrée correspondante peut être trouvée : Dans l'affirmative, le composant intermédiaire de communication QKD sort de la mémoire la valeur Z et l'étiquette temporellet de l'entrée correspondante, la transmet au SXOR et efface la mémoireM , le SXOR recevant des données des mémoires Ma et Mb et seule l'information de parité de la préparation de l'étatz étant finalement transmise à l'unité de post-traitement.

15. Processus de communication QKD comprenant le composant intermédiaire de communication QKD de l'une des revendications 1 et 7, comprenant les étapes du processus de communication QKD selon les revendications 12 à 14.

16. Processus de communication QKD selon les revendications 12 à 15, dans lequel les modules QKD effectuent une étape de filtrage en temps réel.

## Figure 1

| | Quantum channel |
| ---- | ---- |
| ------------ | Classical comm |
| | Site |

## Figure 2A

| | Quantum channel |
| ---- | ---- |
| ------------ | Classical signals |
| | Physical sites |

*indistinguishable coherent pulses*

## Figure 2B

*joint measurement*

| | Entanglement |
| ---- | ---- |
| | Classical communication |
| | Site |

## Figure 3

(a)

(b)

## Figure 4

| | |
|---|---|
| ———— | Quantum channel |
| ------------ | Classical communication |
| ☐ | Nod |

## Figure 5A

| | |
|---|---|
| ———— | Quantum channel |
| ------------ | Classical signals |
| ☐ | Security perimeter |

Figure 5B

$(\mathrm{XOR}(z_i^A, z_j^B), t^A, t^B)$

XOR

$t^A$   $z_i^A$   $z_j^B$   $t^B$

Memory
- release if A AND B are input
- erase upon releasing

$(z_i^A, t^A)$                    $(z_j^B, t^B)$

Figure 5C

$(\mathrm{XOR}(z_i^A, z_j^B), t_i^A, t_j^B)$

$(x_k^A, t_k^A)$              $(x_l^B, t_l^B)$

$(x_k^A, t_k^A)$                                        $(x_l^B, t_l^B)$

$(z_i^A, t_i^A)$              SXOR              $(z_j^B, t_j^B)$

Figure 6A

| Alice | Charlie | Bob |

Q-State choice
+ time tagging

$x_A$   $z_A$   $z_B$   $x_B$

M   M

SXOR

PU        Processing Unit        PU

**Figure 6B**

$(XOR(z_i^A,z_i^B),T^A,T^B)$

$(x_i^A,t_i^A)$       $(x_i^B,t_i^B)$

$(x_i^A,t_i^A)$     SXOR     $(x_i^B,t_i^B)$

$(z_i^A,t_i^A)$       $(z_i^B,t_i^B)$

$(T^A)$     $M^A$     $M^B$     $(T^B)$

**Figure 7**

Charlie 1
Processing Unit
X M M X
Z Z
SXOR

Charlie 3
Processing Unit
X M M X
Z Z
SXOR

Charlie 2
Processing Unit
SXOR
M M
$x_A$ $z_A$ $z_B$ $x_B$
Q-State choice
+ time tagging

Alice
PU

Bob
PU

**Figure 8**

Alice     Charlie     Bob

Q-State choice + time tagging    Q-State choice + time tagging    Q-State choice + time tagging

Z    $z_C$ $x_C$    Z    $z_C$ $x_C$    Z    $z_C$ $x_C$

X     X     X

M M    M M    M M

SXOR    SXOR    SXOR

Processing Unit    Processing Unit    Processing Unit

## Figure 9

## Figure 10

$$(\mathrm{XOR}(z_i^A, z_j^B), t_i^A, t_j^B)$$

$$(z_i^A, t_i^A) \qquad (z_j^B, t_j^B)$$

$$(x_k^A, t_k^A) \qquad\qquad (x_l^B, t_l^B)$$

SXOR

α β β α

γ γ

$(x_k^A, t_k^A)$ → S^A ← $(x_l^B, t_l^B)$

$(z_i^A, t_i^A)$ → ← $(z_j^B, t_j^B)$

Status^A → Switch Control ← Status^B

## Figure 11

| Alice | Charlie | Dave | Bob |

KMS — KMS

Post-Processing — Post-Processing — Post-Processing — Post-Processing

Optical Module — Optical Module — Synchronizing Processing Unit — Optical Module — Optical Module — Optical Module

——— Quantum channel

------------ Classical communication

☐ Node

## REFERENCES CITED IN THE DESCRIPTION

**Patent documents cited in the description**

- US 5307410 A

- US 9294272 B2

**Non-patent literature cited in the description**

- **C. H. BENNETT**. Quantum cryptography using any two non-orthogonal states. *Phys. Rev. Lett.*, 1992, vol. 68, 3121